# FASCICULE DE BREVET EUROPEEN

(11) **EP 0 914 855 B1**
(45) Date de publication et mention de la délivrance du brevet: **09.06.2004**
(21) Numéro de dépôt: 98402739.1
(22) Date de dépôt: 03.11.1998
(51) Int. Cl.: B01D 45/08

(54) **Séparateur de l'eau contenue dans un écoulement de fluide**
Abscheider zur Wassertrennung aus einem Fluidstrom
Separator of water contained in a fluid stream

(30) Priorité: 05.11.1997 FR 9713920
(43) Date de publication de la demande: 12.05.1999
(73) Titulaire: SOCIETE D'ETUDES ET DE CONSTRUCTIONS AERO-NAVALES, F-92230 Gennevilliers (FR)
(72) Inventeur: Rolland, André Charles, 93800 Epinay sur Seine (FR)
(74) Mandataire: Coester, Jacques Charles

(56) Documents cités:
- EP-A- 0 272 765
- EP-A- 0 462 687
- DE-B- 2 823 942
- GB-A- 1 092 348
- GB-A- 2 189 161
- SU-A- 1 174 062
- US-A- 2 083 764
- PATENT ABSTRACTS OF JAPAN vol. 006, no. 049 (C-096), 31 mars 1982 -& JP 56 163750 A (SANKYO DENGIYOU KK), 16 décembre 1981

## Description

L'invention concerne un séparateur d'eau d'un écoulement de fluide contenant des gouttelettes d'eau, du type comprenant au moins une surface déflectrice inclinée, montée à l'intérieur de la voie d'écoulement du fluide, avantageusement en forme d'un canal, de façon que les gouttes se séparent du fluide lorsque ce dernier est dévié par ladite surface déflectrice.

Des séparateurs de ce type sont déjà connus. Ils présentent l'inconvénient que l'eau séparée et s'écoulant le long de la surface déflectrice est à nouveau entraînée par le fluide au niveau du bord inférieur de la surface, notamment quand le fluide s'écoule à vitesse élevée.

La présente invention a pour but de proposer un séparateur d'eau, du type défini plus haut, qui pallie l'inconvénient, qui vient d'être décrit, des séparateurs connus.

Pour atteindre ce but, le séparateur d'eau selon l'invention qui est définie dans la revendication 1, est caractérisé en ce que la surface déflectrice comporte des évidements collecteurs sous forme de trous répartis sur cette surface et, reliés à un espace dans lequel règne une dépression par rapport à la pression présente dans un canal d'écoulement.

Selon une caractéristique de l'invention, la surface déflectrice est formée par la surface d'au moins une plaque creuse dont la paroi déflectrice est pourvue d'évidements traversants précités et dont l'intérieur communique avec l'espace de dépression précité et un dispositif collecteur de l'eau recueillie.

Selon une caractéristique avantageuse de l'invention, la surface déflectrice est formée par une pluralité de plaques creuses inclinées, agencées de façon à être décalées les unes par rapport aux autres, perpendiculairement à l'écoulement de fluide, avec un léger chevauchement dans la direction axiale de l'écoulement des bords aval et amont de deux plaques adjacentes.

Selon une autre caractéristique avantageuse de l'invention, l'évidement précité est formé par une fente longitudinale située près du bord aval d'une surface déflectrice.

Selon encore une autre caractéristique de l'invention, le séparateur est disposé à la sortie d'un échangeur de chaleur, dans la partie de transition de la sortie à grande aire de section transversale d'écoulement vers la gaine d'écoulement d'aire plus réduite, la surface déflectrice inclinée étant formée avantageusement par des parties de la zone de transition.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :
- la figure 1 est une vue en perspective et en coupe axiale d'un canal d'écoulement d'un fluide équipé d'un séparateur connu;
- la figure 2 est une vue en perspective, à plus grande échelle, et avec arrachement, d'un élément déflecteur montré en II sur la figure 1 ;
- la figure 3 est une vue similaire à la figure 1, mais montrant une disposition différente des surfaces déflectrices;
- la figure 4 est une vue schématique illustrant l'utilisation d'un séparateur selon l'invention, à la sortie d'un échangeur de chaleur ;
- la figure 5 est une vue en perspective d'un mode de réalisation d'un séparateur selon l'invention ;
- la figure 6 est une vue en coupe le long de la ligne VI-VI de la figure 5 ;
- la figure 7 est une vue en perspective d'une plaque déflectrice du séparateur selon la figure 5, et
- la figure 8 est une vue schématique de l'utilisation du séparateur selon la figure 5 dans le collecteur de sortie d'un échangeur de chaleur.

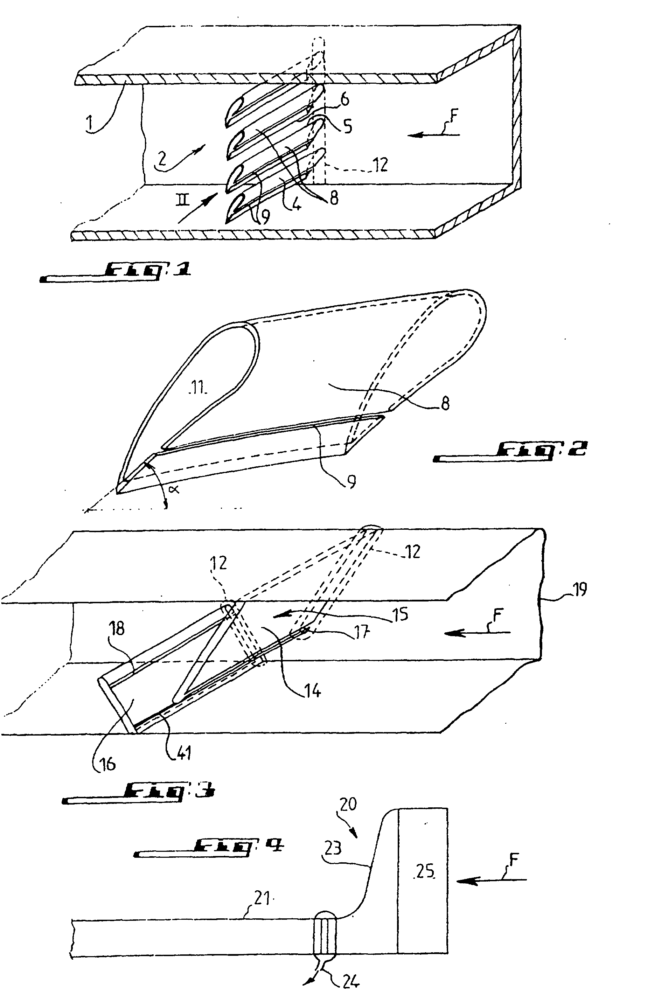

Sur la figure 1, les numéros de référence 1 et 2 désignent respectivement un canal d'écoulement d'un fluide F et un séparateur des gouttelettes d'eau contenues dans l'écoulement de fluide selon l'art antérieur (voir par exemple EP-A-272 765, DE-A-2 823 942 et GB-A-1 092 348). Ce type de séparateur 2 comprend une pluralité d'ailettes 4 disposée dans un plan perpendiculaire à l'écoulement F, à une distance les unes des autres telle que le bord d'attaque 5 et bord de fuite 6 de deux ailettes adjacentes se chevauchent légèrement dans la direction de l'écoulement F.

Les ailettes sont montées dans le canal 1 de façon que leur face déflectrice 8 soit inclinée de façon à provoquer une déflexion de l'écoulement.

Chaque ailette est réalisée sous forme d'un corps creux et présente, relativement proche de son bord aval ou bord de fuite 6, une fente 9 qui traverse la paroi 10 dont la face externe constitue la surface déflectrice 8. L'intérieur 11 de chaque ailette est relié à un espace non représenté, dans lequel règne une pression qui est inférieure à celle régnant dans le canal d'écoulement.

On comprend aisément que les gouttes d'eau séparées de l'écoulement F dévié par la surface déflectrice 8 s'écoulent le long de cette surface en direction de la fente 9 à travers laquelle elles sont aspirées dans l'intérieur 11 de l'ailette. Pour l'évacuation de l'eau parvenue dans l'ailette, son espace intérieur est relié à un conduit collecteur d'eau prévu dans au moins une paroi latérale de canal entre laquelle s'étendent des ailettes et schématiquement indiqué en 12.

Il est à noter que, pour réduire les pertes de charge dans le fluide F, les ailettes sont profilées.

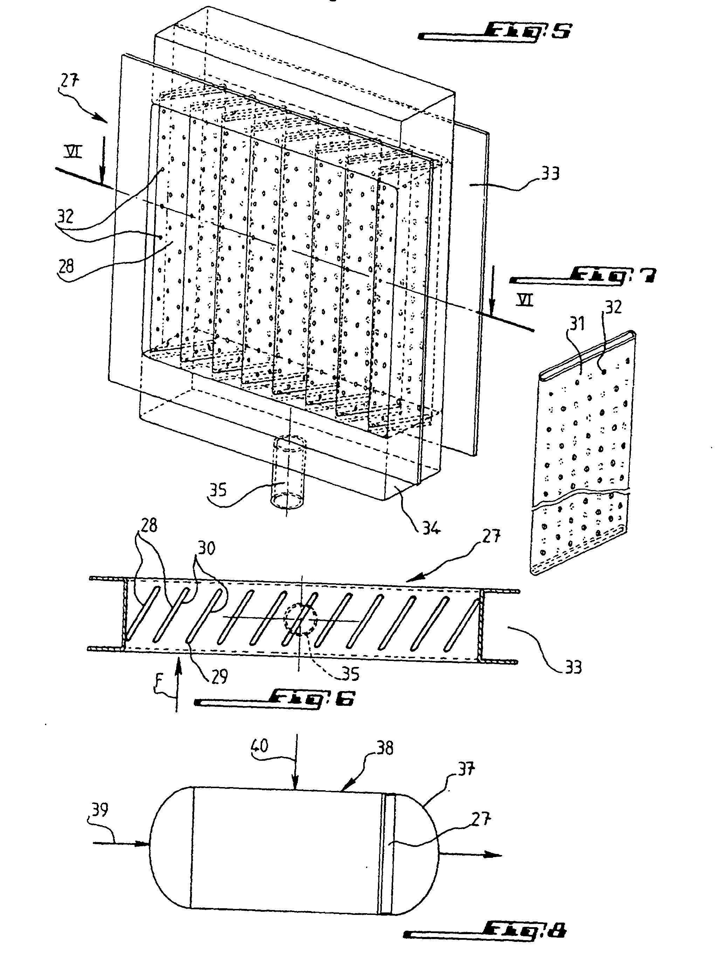

La figure 3 montre un deuxième mode de disposition des ailettes 4 dans le séparateur, dans lequel la surface déflectrice du fluide F est la face avant 14 d'une plaque unique creuse inclinée 15 qui s'étend jusqu'à une distance prédéterminée de la paroi inférieure du canal. Décalée vers l'arrière par rapport la plaque 15 s'étend, également de façon inclinée, mais dans le sens inverse à la plaque 15, une plaque déflectrice 16 de façon à établir avec cette dernière une chicane.

La plaque creuse 15 présente, près de son bord de fuite 6 une fente 17 qui s'étend sur toute la largeur de la plaque et traverse la paroi 19 du canal de circulation. Comme les ailettes 4 de la figure 1, l'intérieur de la plaque 15 est relié à un espace de dépression et la plaque est pourvue d'un conduit d'évacuation de l'eau qui s'accumule dans la plaque après avoir traversé la fente collectrice 17. La plaque 16 présente sur une surface déflectrice une fente d'aspiration 18 dans sa partie aval et peut être pourvue d'un dispositif 41 de récupération d'eau à sa base c'est-à-dire au niveau de son arête amont pour permettre à l'eau séparée par la plaque 15 mais non récupérée par la fente 17 d'être captée immédiatement par la plaque 16. Ce dispositif 41 pourrait être formé essentiellement par une autre fente.

Selon la présente invention au lieu d'avoir des fentes collectrices, les surfaces déflectrices 8, 14 des ailettes 4 ou de la plaque 14, sont traversées par des trous répartis sur la surface. L'eau s'écoulant le long de la surface, sous l'effet de la dépression, est alors aspirée dans l'intérieur de l'ailette ou de la plaque, à travers les trous. Le dispositif de récupération 41 sur la figure 3 pourrait alors être une zone pourvue de trous ou poreuse, comme il sera décrit de façon détaillée plus loin.

Pour améliorer encore le pouvoir de séparation du séparateur, la surface déflectrice peut être recouverte d'une couche en un matériau hydrophile tel qu'en terre cuite, qui présente une certaine porosité et absorbe l'eau.

La figure 4 montre schématiquement une utilisation avantageuse d'un séparateur selon l'invention, à savoir la disposition du séparateur à la sortie d'un échangeur de chaleur 25, dans la zone de transition 20 de la section transversale importante de l'échangeur vers la section transversale comparativement faible du canal d'écoulement 21. La face déflectrice inclinée pourrait alors être formée par la face avant de la paroi 23 de la zone de transition. Cette paroi est creuse et pourvue d'évidements d'aspiration de l'eau qui s'est séparée du fluide en provenance de l'échangeur de chaleur. L'eau qui est retirée du fluide est évacuée en 24.

Le matériau hydrophile peut aussi être installé sur les parois de la zone de transition 20 en amont des fentes d'aspiration du collecteur 24.

Le séparateur selon l'invention présente l'avantage qu'il peut être installé dans des zones de faible vitesse d'écoulement, comme cela est montré sur la figure 4. Il est à noter que la différence de pression entre l'intérieur du canal et l'extérieur peut être relativement faible, par exemple de l'ordre de 4 ou 5 millibars.

Bien entendu, de multiples modifications peuvent être apportées aux déflecteurs décrits et représentés. Ceux-ci pourraient par exemple être réalisés sous forme de corps pleins percés d'un canal de drainage en communication avec les fentes ou trous d'aspiration.

La figure 5 montre un mode de réalisation particulièrement avantageuse d'un séparateur selon l'invention. Ce séparateur indiqué de façon générale par le numéro 27 est réalisé sous forme d'un module d'une épaisseur relativement faible dans la direction de l'écoulement du fluide. Comme on le voit, ce séparateur comporte un certain nombre de plaques creuses 28 disposées dans une rangée perpendiculairement à la voie d'écoulement, parallèlement les unes aux autres et inclinées par rapport à l'axe de la voie et donc à la direction d'écoulement du fluide, indiquée par la flèche F. Ces plaques sont juxtaposées de façon que le bord avant d'attaque 29 d'une plaque et le bord aval de fuite 30 de la plaque adjacente se chevauchent quelque peu pour éviter que du fluide puisse passer à travers le module sans frapper la face déflectrice avant 31 d'une plaque.

Comme on le voit notamment sur la figure 7, chaque plaque 28 est avantageusement formée par un tube plat dont au moins la face avant réflectrice 31 comporte un certain nombre de trous 32 qui traversent la paroi du tube et sont régulièrement répartis sur toute cette face déflectrice 31. La répartition des trous est régulière sur cette surface. Le nombre de trous, leur diamètre et la géométrie de leur répartition sont choisis en fonction des paramètres de l'écoulement du fluide et de l'orientation des tubes par rapport au sens de la gravité.

Les plaques 28 sont disposées dans un cadre 33 de forme rectangulaire dont les côtés supérieur et inférieur sont réalisés sous forme de chambres collectrices dans lesquelles s'ouvrent les tubes plats constituant les plaques creuses 28. La chambre inférieure indiquée en 34 constitue la chambre collectrice de l'eau séparée du fluide. Le raccord est désigné par 35. Elle est reliée à la source de dépression.

La figure 8 montre une utilisation avantageuse du séparateur 27. Grâce à sa faible épaisseur il peut être facilement intégré au collecteur 37 d'un échangeur de chaleur 38 recevant les deux fluides de températures différentes en 39 et 40.

La surface réflectrice 31 contenant les trous 32 peut être recouverte d'un produit hydrophile. Le pouvoir d'extraction d'eau du séparateur 27 peut ainsi être augmenté considérablement.

L'avantage du mode de réalisation du séparateur selon les figures 5 à 7 réside dans le fait que l'écoulement de fluide qui contient les gouttelettes d'eau frappe les plaques séparatrices 28 dont les faces réflectrices 31 sont planes et inclinées par rapport à la direction d'écoulement selon un angle prédéterminé et que l'eau et avec elle une faible quantité d'air est immédiatement aspirée par les trous 32 qui sont répartis uniformément sur la face réceptrice, sous l'effet de la dépression qui règne à l'intérieur des plaques.

Les éléments appelés tubes peuvent avoir une section droite quelconque et un mode de fabrication très diversifié faisant appel à tout type de matériaux (métal, plastique, etc.) et d'assemblage (soudure, brasage, collage, etc.)

## Revendications

1. Séparateur de gouttelettes d'eau contenues dans un écoulement de fluide s'écoulant dans une voie d'écoulement, avantageusement en forme d'un canal, du type comprenant au moins une surface déflectrice inclinée montée à l'intérieur de la voie d'écoulement, de façon que les gouttes se séparent du fluide lorsque ce dernier est dévié par ladite surface déflectrice, la surface déflectrice (8, 14) comportant des évidements collecteurs (9, 17) de l'eau séparée, qui sont reliés à un espace dans lequel règne une dépression par rapport à la pression dans le canal d'écoulement (1), **caractérisé en ce que** les évidements précités dans une surface déflectrice (8, 14) sont formés par des trous répartis sur cette surface.

2. Séparateur selon la revendication 1, **caractérisé en ce que** la surface déflectrice est formée par la surface (14) d'au moins une plaque creuse (15) dont la paroi déflectrice est pourvue des évidements précités traversants et dont l'intérieur communique avec l'espace de dépression précité et un dispositif collecteur de l'eau recueillie.

3. Séparateur selon la revendication 2, **caractérisé en ce que** la surface déflectrice est formée par les surfaces déflectrices (8) d'une pluralité de plaques creuses (4) inclinées, agencées de façon à être décalées les unes des autres perpendiculairement à l'écoulement de fluide F, avec un léger chevauchement dans la direction axiale de l'écoulement des bords de fuite (6) et d'attaque (5) de deux plaques (4) adjacentes.

4. Séparateur selon la revendication 3, **caractérisé en ce que** les plaques déflectrices précitées (4) sont réalisées sous forme d'ailettes de section profilée pour réduire les pertes de charge de l'écoulement F.

5. Séparateur selon l'une des revendications précédentes, **caractérisée en ce qu'**une surface déflectrice (8, 14) est recouverte d'une couche en matériau hydrophile adapté pour éviter la formation de gouttes sur cette surface.

6. Séparateur selon l'une des revendications précédentes, **caractérisé en ce que** la surface déflectrice (8, 14) est la surface d'une paroi en matériau poreux et les évidements précités sont formés par des voies capillaires traversant cette paroi.

7. Séparateur selon l'une des revendications précédentes, **caractérisé en ce qu'**il est disposé à la sortie d'un échangeur de chaleur (25) sur les parois de la partie de transition (20) de la sortie à grande section transversale d'écoulement vers la gaine d'écoulement de section transversale plus réduite (21), la surface déflectrice inclinée étant formée avantageusement par des parties (23) de la zone de transition (20).

8. Séparateur selon l'une des revendications précédentes **caractérisé en ce que** les plaques creuses (28) comportent des faces réflectrices sensiblement planes (31), inclinées par rapport à l'écoulement du fluide (F) et **en ce que** les plaques (28) sont juxtaposées, dans un même plan perpendiculaire à l'axe de la voie d'écoulement.

9. Séparateur selon la revendication 8, **caractérisé en ce que** les plaques (23) sont formées par des tubes plats.

## Patentansprüche

1. Abscheider zur Trennung von in einem Fluidstrom enthaltenen Wassertröpfchen, die in einen Durchflussweg abfließen, vorzugsweise in Form eines Kanals eines Typs, der mindestens eine geneigte, innerhalb des Durchflussweges befindliche Ablenkfläche aufweist, so dass sich die Tropfen vom Fluid trennen, wenn dieses durch die besagte Ablenkfläche abgelenkt wird, wobei die Ablenkfläche (8, 14) für das abgeschiedene Wasser Sammelaussparungen (9, 17) aufweist, die mit einem Raum verbunden sind, in dem gegenüber dem Druck im Abflusskanal (1) ein Unterdruck herrscht, **dadurch gekennzeichnet, dass** die auf der Ablenkfläche (8, 14) vorgenannten Aussparungen von Löchern gebildet werden, die auf dieser Fläche verteilt sind.

2. Abscheider nach Anspruch 1, **dadurch gekennzeichnet, dass** die Ablenkfläche von der Fläche (14) mindestens einer Hohlplatte (15) gebildet wird, deren Ablenkwand mit den vorgenannten durchgängigen Aussparungen versehen ist und deren Inneres mit dem vorgenannten Unterdruckraum und einem Sammelbehälter für das gesammelte Wasser kommuniziert.

3. Abscheider nach Anspruch 2, **dadurch gekennzeichnet, dass** die Ablenkfläche von Ablenkflächen (8) einer Vielzahl von geneigten Hohlplatten (4) gebildet wird, die so nebeneinander angeordnet sind, dass sie zum Fluidstrom F senkrecht gegeneinander versetzt sind mit einer leichten Überlappung der Austritts- (6) und Eintrittskanten (5) von zwei benachbarten Platten (4) in Axialrichtung des Abflusses.

4. Abscheider nach Anspruch 3, **dadurch gekennzeichnet, dass** die vorgenannten geneigten Platten (4) als Rippen mit Profilschnitt ausgebildet sind, um Lastverluste des Stroms F zu reduzieren.

5. Abscheider nach einem der vorhergehenden Ansprüche, **dadurch gekennzeichnet, dass** die Ablenkfläche (8, 14) von einer Schicht aus einem hydrophilen Material überzogen ist, das die Ausbildung von Tropfen auf dieser Oberfläche verhindert.

6. Abscheider nach einem der vorhergehenden Ansprüche, **dadurch gekennzeichnet, dass** die Ablenkfläche (8, 14) die Fläche einer Wand aus porösem Material ist und die vorgenannten Aussparungen von Kapillarwegen gebildet werden, die diese Wand durchqueren.

7. Abscheider nach einem der vorhergehenden Ansprüche, **dadurch gekennzeichnet, dass** er am Ausgang eines Wärmetauschers (25) an den Wänden des Durchgangsteils (20) des Fluidausgangs mit einem großen Querprofil in Richtung Abflussleitung, deren Querprofil kleiner ist (21), angeordnet ist, wobei die geneigte Ablenkfläche vorzugsweise von den Teilen (23) des Durchgangsbereichs (20) gebildet wird.

8. Abscheider nach einem der vorhergehenden Ansprüche, **dadurch gekennzeichnet, dass** die Hohlplatten (28) etwa ebene Reflexionsseiten (31) aufweisen, die in bezug auf den Fluidstrom F geneigt sind, und dadurch, dass die Platten (28) in der gleichen Ebene senkrecht zur Achse des Durchflussweges nebeneinander angeordnet sind.

9. Abscheider nach Anspruch 8, **dadurch gekennzeichnet, dass** die Platten (28) von flachen Rohren gebildet werden.

## Claims

1. Separator of water droplets contained in a fluid stream flowing in a flow way, advantageously in channel form, of the type comprising at least one inclined deflector surface mounted inside the flow way, such that the drops separate from the fluid when the fluid is diverted by said deflector surface, the deflector surface (8,14) comprising collector recesses (9,17) for the separated water, which connect with a space in which low pressure prevails relative to the pressure in the flow channel (1), **characterized in that** the aforesaid recesses in a deflector surface (8, 14) are formed by holes distributed over this surface.

2. Separator as in claim 1, **characterized in that** the deflector surface is formed by the surface (14) of at least one hollow plate (15) whose deflector wall is provided with the aforesaid cross-connecting recesses and whose inner side communicates with the aforesaid low pressure space and a collector device for the collected water.

3. Separator as in claim 2, **characterized in that** the deflector surface is formed by the deflector surfaces (8) of a plurality of inclined hollow plates (4)arranged so that they are staggered in relation to one another perpendicular to the flow of fluid F, with slight overlapping in axial flow direction of the trailing (6) and leading (5) edges of two adjacent plates (4).

4. Separator as in claim 3, **characterized in that** the aforesaid deflector plates are made in the form of blades having a profiled section to reduce load losses of flow F.

5. Separator as in any of the preceding claims, **characterized in that** a deflector surface (8,14) is coated with a layer of hydrophilic material suitable for avoiding the formation of drops on this surface.

6. Separator as in any of the preceding claims, **characterized in that** the deflector surface (8, 14) is the surface of a wall in porous material and the aforesaid recesses are formed by capillary passages crossing through this wall.

7. Separator as in any of the preceding claims, **characterized in that** it is arranged at the outlet of a heat exchanger (25) on the walls of the transition part (20) of the flow output between its large cross section and flow duct of smaller cross section (21), the inclined deflector surface advantageously being formed by parts (23) of the transition zone (20).

8. Separator as in any of the preceding claims, **characterized in that** the hollow plates (28) comprise substantially planar reflector surfaces (31) inclined relative to the flow of fluid (F), and **in that** the plates (28) are juxtaposed in one same plane perpendicular to the axis of the flow channel.

9. Separator as in claim 8,charcterized in that the plates (28) are formed by flat tubes.
